# EUROPÄISCHE PATENTSCHRIFT

(11) **EP 2 004 439 B1**
(45) Veröffentlichungstag und Bekanntmachung des Hinweises auf die Patenterteilung: **22.08.2012**
(21) Anmeldenummer: 07723698.2
(22) Anmeldetag: 28.03.2007
(51) Int. Cl.: B60K 11/04, B60R 19/48, B62D 25/08, F28F 9/00

(54) **FRONTPARTIE FÜR EIN KRAFTFAHRZEUG**
FRONT PART FOR A MOTOR VEHICLE
PARTIE AVANT D'UN VEHICULE AUTOMOBILE

(30) Priorität: 06.04.2006 DE 102006016159
(43) Veröffentlichungstag der Anmeldung: 24.12.2008
(73) Patentinhaber: GM Global Technology Operations LLC, Detroit, MI 48265-3000 (US)
(72) Erfinder: STELLER, Claus, 64521 Gross-Gerau (DE)
(74) Vertreter: Strauss, Peter
(86) Internationale Anmeldenummer: PCT/EP2007/002752
(87) Internationale Veröffentlichungsnummer: WO 2007/115689

(56) Entgegenhaltungen:
- WO-A-03/070503
- DE-A1- 10 008 638
- DE-A1- 10 150 643
- DE-C1- 3 246 583
- FR-A1- 2 774 058
- JP-A- 2002 286 392

## Beschreibung

Die vorliegende Erfindung betrifft eine Frontpartie für ein Kraftfahrzeug mit einem Stoßfänger und einem hinter dem Stoßfänger angebrachten Kühlermodul.

Der Stoßfänger einer solchen Frontpartie ist vorgesehen, um sich bei einem Zusammenstoß mit einem Hindernis oder einem anderen Fahrzeug plastisch zu verformen und dabei gezielt kinetische Energie zu absorbieren. Wenn das Ausmaß der Verformung größer wird als ein üblicherweise zwischen dem Stoßfänger und dem Kühlermodul vorhandener Luftspalt, gelangen beide in Kontakt miteinander, und auch der Kühler wird verformt, so dass er unter hohem Kostenaufwand repariert oder ersetzt werden muss. Die Struktur des Kühlers besteht großenteils aus dünnen Blechen von geringer Tragfähigkeit, deren Verformung zur gewünschten Absorption von kinetischer Energie kaum beiträgt, die aber bereits bei einem leichten Zusammenstoß so stark verformt werden können, dass der Kühler nicht mehr arbeitet. Wenn dies geschieht, ist das Fahrzeug nicht mehr fahrbereit und muss abgeschleppt werden, selbst wenn ansonsten die Unfallfolgen auf Blechschäden beschränkt sind.

DE 101 50 643 A1 offenbart eine KraftfahrzeugFrontpartie, bei der ein Kühlmodul schwenkbar angeordnet ist, um im Falle eines Zusammenstoßes aus der Kollisionszone herauszuschwenken. An einen Wasserkasten des Kühlmoduls sind Spreizdübel angespritzt, die im Falle eines Zusammenstoßes entriegelt werden und so das zurückweichen der Kühlmoduls ermöglichen. Ob dadurch das Kühlmodul tatsächlich vor Beschädigung geschützt werden kann, hängt davon ab, dass eine die Schwenkbewegung antreibende Kraft tatsächlich schonend in das Kühlmodul eingleitet werden kann.

JP 2002-286392 A offenbart eine Frontpartie nach dem Oberbegriff des Anspruchs 1. Ein Kühlermodul ist an seiner Oberkante schwenkbar mit einer Trägerstruktur des Kraftfahrzeugs verbunden und an seiner Unterkante durch bei einem Unfall abscherende Stifte festgelegt. Die Stifte müssen nach einem Unfall ersetzt werden, dies ist ohne einen Ausbau des Kühlers nicht möglich.

Ziel der vorliegenden Erfindung ist, eine Frontpartie für ein Kraftfahrzeug zu schaffen, die eine solche Krafteinleitung ohne Beschädigung des Kühlers ermöglicht und ggf. mit geringem Aufwand reparierbar ist.

Dieses Ziel wird erfindungsgemäß erreicht durch eine Kraftfahrzeugfrontpartie mit den Merkmalen des Anspruchs 1. Diese Konstruktion erlaubt es dem Kühlermodul, bei einem Zurückweichen des Stoßfängers diesem auszuweichen, ohne dass ein nennenswerter Widerstand überwunden werden müsste, der zu einer gegenseitigen Beschädigung von Stoßfänger und Kühlermodul führen könnte. Da von dem Rahmen keine Wärmetauschereigenschaften verlangt sind, kann dieser im Wesentlichen auf Formbeständigkeit und Festigkeit hin konstruiert sein. Indem der Rahmen über eine dem Stoßfänger zugewandte Vorderseite des Kühlers vorspringt, kann sichergestellt werden, dass wenn bei einem Zusammenstoß bei niedriger Geschwindigkeit der Stoßfänger zurückweicht, nur der Rahmen mit dem Stoßfänger in Kontakt gerät, und ein direkter Kontakt zwischen Stoßfänger und Kühler, der den Kühler beschädigen könnte, kann verhindert werden. Nach einem Unfall kann die Brauchbarkeit des Kühlermoduls durch einfaches Wiedereinrasten in die elastische Klammer wieder hergestellt werden.

Die erfindungsgemäße Frontpartie ist besonders einfach realisierbar, wenn der Freiheitsgrad ein Schwenkfreiheitsgrad ist. Insbesondere können in diesem Falle die ersten Haltemittel selbst eine Schwenkachse für die Ausweichbewegung des Kühlermoduls definieren.

Kühlermodul und Stoßfänger sollten durch einen Spalt getrennt sein, so dass nicht jede Zurückweichbewegung des Stoßfängers sich notwendigerweise auf das Kühlermodul auswirkt.

Die durch das Zurückweichen des Stoßfängers lösbaren zweiten Haltemittel können insbesondere durch eine in Längsrichtung des Fahrzeuges offene Klammer und einen in die offene Seite der Klammer eingeführten Vorsprung gebildet sein. Dabei kann der Vorsprung fest mit dem Kühlermodul und die Klammer fest mit einer unter normalen Betriebsbedingungen des Fahrzeuges steifen Trägerstruktur der Frontpartie verbunden sein, oder umgekehrt die Klammer mit dem Kühlermodul und der Vorsprung mit der Trägerstruktur.

Der Vorsprung kann einfach reibschlüssig in der Klammer gehalten sein; vorzugsweise jedoch ist die Klammer verformbar, und der Vorsprung greift formschlüssig in die Klammer ein, so dass zum Lösen des Vorsprungs aus der Klammer ein auf die Funktion abgestimmter Widerstand der Klammer überwunden werden muss.

Die Klammer ist vorzugsweise elastisch verformbar, so dass es zur Wiederherstellung der Anordnung des Kühlermoduls lediglich erforderlich ist, den Vorsprung wieder in die Klammer hineinzudrücken.

Der Rahmen kann beiderseits des Kühlers mit gegen den Stoßfänger vorspringenden Zapfen versehen sein.

Zum Schutz des Kühlers kann an dem Rahmen auch ein die Vorderseite des Kühlers überbrückender Bügel vorgesehen sein.

Zum Schutz des Kühlers ist es auch zweckmäßig, dass eine dem Kühlermodul zugewandte Rückseite des Stoßfängers einen konkaven Verlauf aufweist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht der erfindungsrelevanten Teile eines Kraftfahrzeug-Vorderbaus gemäß einer ersten Ausgestaltung der Erfindung;
- Fig. 2: einen schematischen Schnitt durch den Vorderbau im Normalzustand;
- Fig. 3: einen zu Fig. 2 analogen schematischen Schnitt im Falle eines Zusammenstoßes; und
- Fig. 4: eine zu Fig. 1 analoge Ansicht gemäß einer zweiten Ausgestaltung.

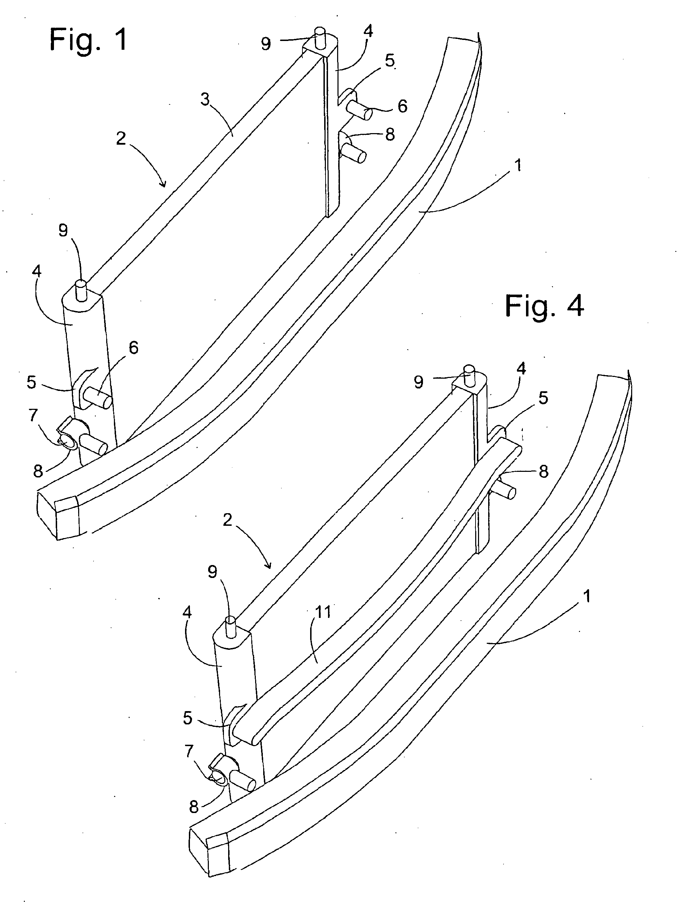

Fig. 1 zeigt in einer perspektivischen Ansicht schräg von oben einen Stoßfänger 1 und ein Kühlermodul 2 gemäß der vorliegenden Erfindung in derjenigen Stellung zueinander, die sie in einem intakten Kraftfahrzeug-Vorderbau einnehmen. Der Stoßfänger ist im Wesentlichen durch ein metallisches Hohlprofil gebildet, das über (nicht dargestellte) in Fahrzeuglängsrichtung stauchbare Trägerarme, so genannte Crashboxen, an einen nicht dargestellten starren Vorderwagen der Karosserie befestigt ist. Der Stoßfänger 1 und die Crashboxen sind in an sich bekannter Weise ausgelegt, um sich bei einem Zusammenstoß plastisch zu verformen. Dadurch kann der Stoßfänger 1 bei einem Zusammenstoß in Fahrzeuglängsrichtung zurückweichen. In einer Anfangsphase des Verformungsprozesses konzentriert die Verformung sich auf die Crashboxen und den Stoßfänger 1, so dass bei einem leichten Zusammenstoß der Vorderwagen vor nur mit erheblichem Kosten- und Arbeitsaufwand behebbaren Schäden geschützt ist.

Das Kühlermodul umfasst einen Kühler 3 von an sich bekanntem Aufbau, der in einen auch als Lüfterzarge bezeichneten Rahmen 4 aus Kunststoff oder Metall eingefasst ist. In der Darstellung der Fig. 1 ist der Rahmen 4 auf zwei Profilteile rechts und links vom Kühler 3 reduziert; alternativ könnte der Kühler 3 auch von einem umlaufenden Rahmen eingefasst sein.

Zwei Zapfen 9 an den oberen Enden der sich im Wesentlichen vertikal erstreckenden Profilteile des Rahmens 4 stellen erste Haltemittel zur Befestigung des Kühlermoduls 2 am Vorderwagen dar und greifen in Öffnungen von nicht dargestellten, fest mit dem Vorderwagen verbundenen Trägerteilen ein. Der Eingriff der Zapfen 9 in die Öffnungen lässt in begrenztem Umfang eine Schwenkbewegung des Kühlermoduls 2 um eine horizontal in Querrichtung des Fahrzeuges durch die beiden Zapfen 9 verlaufende Schwenkachse zu, nicht aber eine Translationsbewegung des Kühlermoduls 2 als Ganzes.

Die zwei Profilteile des Rahmens 4 tragen jeweils eine in Höhe des Stoßfängers 1 seitlich abstehende Lasche 5, von der ein Dorn 6 zum Stoßfänger 1 hin vorsteht. Zwei in seitliche Richtung abstehende Stifte 7 der Rahmenprofile sind in elastischen Klammern 8 formschlüssig gehalten, die ihrerseits fest mit dem Vorderwagen verbunden sind. Sie stellen zweite Haltemittel zur Befestigung des Kühlermoduls 2 an dem Vorderwagen dar.

Selbstverständlich können als erste Haltemittel auch Zapfen an den unteren Enden der Profile des Rahmens 4 gebildet sein, oder es können parallel zu den Stiften 7 in seitliche Richtung von den Profilen abstehende Zapfen die Achse einer Schwenkbewegung des Kühlers festlegen.

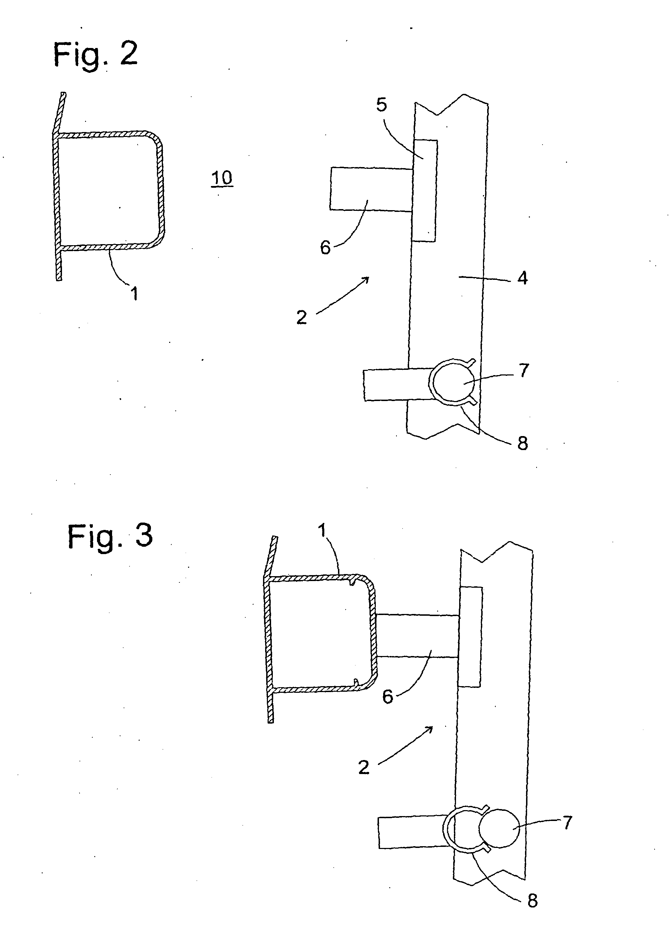

Die Wirkungsweise der Erfindung wird deutlicher anhand der Darstellung der Fig. 2, die den Stoßfänger 1 im Schnitt und ein Stück eines Rahmenprofils 4 des Kühlermoduls 2 mit seiner Lasche 5, dem Dorn 6 und dem Stift 7 in Seitenansicht zeigt. Im hier dargestellten intakten Zustand ist der Stoßfänger 1 vom Kühlermodul 2 durch einen Spalt 10 getrennt, und Stoßfänger 1 und Dorn 6 liegen sich auf gleicher Höhe gegenüber. Wenn bei einem Zusammenstoß der Stoßfänger 1 zurückgedrängt wird, wie in Fig. 3 gezeigt, wird der Spalt 10 reduziert, und der Stoßfänger 1 stößt an den Dorn 6 wenigstens eines der zwei Profile und drängt dadurch das Kühlermodul 2 zurück. Dabei drängen die Stifte 7 die Schenkel der elastisch verformbaren Klammern 8 auseinander und kommen schließlich aus den Klammern 8 frei. In diesem Zustand kann das Kühlermodul 2 dem Druck des Stoßfängers 1 ohne nennenswerten Widerstand nachgeben und zurückweichen, so lange an der Rückseite des Kühlermoduls 2, rechts in Fig. 3 und 4, Platz zum Ausweichen vorhanden ist. Nur wenn ein Zusammenstoß so stark genug ist, dass auch dieser Platz aufgebraucht wird, wird der Kühler 3 zwischen dem Stoßfänger 1 und einem dahinter liegenden Hindernis, zumeist einem Motorblock oder einer Abgasanlage, beschädigt. Bei schwachen Zusammenstößen genügt es jedoch, bei der Reparatur die Schäden an den Crashboxen und ggf. der Karosserieaußenhaut zu beseitigen; das Kühlermodul 2 kann einfach in die Klammern 8 wieder eingerastet werden und ist dann wieder brauchbar.

Wenn der Kühler 3 beim Zusammenstoss unversehrt geblieben ist, kann er eventuell auch in aus den Klammern 8 gelöster und zurückgedrängter Stellung seine Funktion noch so weit wahrnehmen, dass das Fahrzeug eine Werkstatt aus eigener Kraft erreichen kann.

Grundsätzlich wäre es auch denkbar, von einer Unterteilung des Kühlermoduls 2 in Kühler 3 und Rahmen 4 abzusehen und die Dorne 6 oder ein anderes Element, an das der zurückweichende Stoßfänger anschlägt, direkt am Kühler vorzusehen. Die Unterteilung hat jedoch den Vorteil, dass eine Beschädigung der Dorne 6 oder der Stifte 7, die bei einem Zusammenstoß auftreten kann, durch Austausch der betreffenden Teile des Rahmens 4 schnell und preiswert behoben werden kann und keinen Eingriff am Kühler selbst erfordert.

Wie in Fig. 1 zu sehen, hat der Stoßfänger 1 einen gekrümmten Verlauf mit einer dem Kühlermodul 2 zugewandten konkaven Rückseite. Bei einem Zusammenstoß, der den Stoßfänger 1 in etwa symmetrisch und über seine Breite verteilt belastet, bleibt die Krümmung des Stoßfängers 1 erhalten, so dass durch die Krümmung gewährleistet ist, dass der Stoßfänger 1 auf die Dornen 6 trifft und das Kühlermodul 2 aus den Klammern 8 verdrängt, bevor es zu einer Berührung zwischen dem Stoßfänger und dem Kühler 3 selbst kommen kann.

Bei einem Zusammenstoß mit einem schmalen Hindernis wie etwa einem Baum, der den Stoßfänger 1 auf nur einem kleinen Teil seiner Breite belastet, besteht die Möglichkeit, dass der Stoßfänger 1 einknickt. Fig. 4 zeigt eine Ausgestaltung, die es auch in diesem Fall erlaubt, den Kühler 3 zu schützen. Hier sind die zwei Dorne 6 durch eine Rippe 11 ersetzt, die sich, nach vorn gewölbt, in Höhe des Stoßfängers 1 von einem der vertikalen Profile des Rahmens 4 zum anderen erstreckt. Diese Rippe 11 kann den Druck des Stoßfängers 1 auch dann abfangen und in den Rahmen 4 einleiten, wenn der Stoßfänger 1 vor dem Kühler 3 einknickt, so dass auch für diesen Fall die Möglichkeit geschaffen wird, dass das Kühlermodul 2 zurückweicht und der Kühler 3 unbeschädigt bleibt.

### Bezugszeichenliste

- 1: Stoßfänger
- 2: Kühlermodul
- 3: Kühler
- 4: Rahmen
- 5: Lasche
- 6: Dorn
- 7: Stift
- 8: Klammer
- 9: Zapfen
- 10: Luftspalt
- 11: Rippe

## Patentansprüche

1. Frontpartie für ein Kraftfahrzeug mit einem Stoßfänger (1) und einem hinter dem Stoßfänger (1) angebrachten Kühlermodul (2), das durch erste (9) und lösbare zweite Haltemittel (7, 8) gehalten ist,
wobei die ersten Haltemittel (9) eine Bewegung des Kühlermoduls (2) mit einem Freiheitsgrad in eine vom Stoßfänger (1) abgewandte Richtung erlauben, wenn die zweiten Haltemittel (7, 8) gelöst sind, und die zweiten Haltemittel (7, 8) durch ein Zurückweichen des Stoßfängers (1) lösbar sind, wobei das Kühlermodul (2) einen Kühlers (3) und einen den Kühler einfassenden Rahmen (4) umfasst und dass der Rahmen (4) über eine dem Stoßfänger (1) zugewandte Vorderseite des Kühlers (3) vorspringt, dadurch gekennze-chnet, dass die zweiten Haltemittel (7, 8) eine in Längsrichtung des Fahrzeugs offene elastische Klamner (8) und einen in die offene Seite der Klammer (8) eingeführten Stift (7) umfassen, der von der Klammer (8) lösbar ist, indem er Schenkel der elastisch verformbaren Klammer auseinander drängt.

2. Frontpartie nach Anspruch 1, **dadurch gekennzeichnet, dass** der Freiheitsgrad ein Schwenkfreiheitsgrad ist.

3. Frontpartie nach Anspruch 2, **dadurch gekennzeichnet, dass** die ersten Haltemittel (9) eine Schwenkachse definieren.

4. Frontpartie nach einem der vorhergehenden Ansprüche,**dadurch gekennzeichnet, dass** der Vorsprung (7) formschlüssig in die verformbare Klammer (8) eingreift.

5. Frontpartie nach einem der vorhergehenden Ansprüche, **dadurch gekennzeichnet, dass** das Kühlermodul (2) und der Stoßfänger (1) durch einen Luftspalt (10) getrennt sind.

6. Frontpartie nach einem der vorhergehenden Ansprüche, **dadurch gekennzeichnet, dass** der Rahmen (4) beiderseits des Kühlers (3) gegen den Stoßfänger (1) gerichtete Vorsprünge (6) trägt.

7. Frontpartie nach einem der vorhergehenden Ansprüche, **dadurch gekennzeichnet, dass** der Rahmen (4) einen die Vorderseite des Kühlers (3) überbrückenden Bügel (11) trägt.

8. Frontpartie nach einem der vorhergehenden Ansprüche, **dadurch gekennzeichnet, dass** eine dem Kühlermodul (2) zugewandte Rückseite des Stoßfängers (1) einen konkaven Verlauf aufweist.

## Claims

1. A front part for a motor vehicle, comprising a bumper (1) and a radiator module (2) attached behind the bumper (1), which radiator module (2) is held by the first (9) and the releasable second holding means (7, 8), with the first holding means (9) permitting a movement of the radiator module (2) with a degree of freedom in a direction facing away from the bumper (1) when the second holding means (7, 8) are released, and the second holding means (7, 8) are releasable by a yielding of the bumper (1), with the radiator module (2) comprising a radiator (3) and a frame (4) enclosing the radiator, and that the frame (4) protrudes beyond the front side of the radiator (3) facing the bumper (1), **characterized in that** the second holding means (7, 8) comprise an elastic clamp (8) which is open in the longitudinal direction of the vehicle and a pin (7) which is introduced into the open side of the clamp (8) and which is releasable from the clamp (8) by pushing the legs apart of the elastically deformable clamp.

2. A front part according to claim 1, **characterized in that** the degree of freedom is a pivoting degree of freedom.

3. A front part according to claim 2, **characterized in that** the first holding means (7) define a pivoting axis.

4. A front part according to one of the preceding claims, **characterized in that** the projection (7) engages in an interlocking fashion into the deformable clamp (8).

5. A front part according to one of the preceding claims, **characterized in that** the radiator module (2) and the bumper (1) are separated by an air gap (10).

6. A front part according to one of the preceding claims, **characterized in that** the frame (4) comprises projections (6) on both sides of the radiator (3), which projections (6) are directed against the bumper (1).

7. A front part according to one of the preceding claims, **characterized in that** the frame (4) carries a bracket (11) which bridges the front side of the radiator (3).

8. A front part according to one of the preceding claims, **characterized in that** a rear side of the bumper (1) facing the radiator module (2) has a concave progression.

## Revendications

1. Partie avant d'un véhicule à moteur avec un pare-chocs (1) et un module de radiateur (2) disposé derrière le pare-chocs (1), qui est retenu par des premiers moyens de fixation (9) et des deuxièmes moyens de fixation amovibles (7, 8), les premiers moyens de fixation (9) permettant un déplacement du module de radiateur (2) avec un degré de liberté dans une direction opposée au pare-chocs (1) quand les deuxièmes moyens de fixation (7, 8) sont défaits, et les deuxièmes moyens de fixation (7, 8) peuvent être défaits par un recul du pare-chocs (1), le module de radiateur (2) comprenant un radiateur (3) et un cadre (4) entourant le radiateur et le cadre (4) faisant saillie au-delà d'une face avant du radiateur (3) tournée vers le pare-chocs (1), **caractérisée en ce que** les deuxièmes moyens de fixation (7, 8) comprennent une pince élastique (8) ouverte dans le sens de la longueur du véhicule et une goupille (7) insérée dans le côté ouvert de la pince (8), qui peut être détachée de la pince (8) en écartant les bras de la pince qui est déformable de façon élastique.

2. Partie avant selon la revendication 1, **caractérisée en ce que** le degré de liberté est un degré de liberté en pivotement.

3. Partie avant selon la revendication 2, **caractérisée en ce que** les premiers moyens de fixation (9) définissent un axe de pivotement.

4. Partie avant selon l'une des revendications précédentes, **caractérisée en ce que** la saillie (7) se met en prise en correspondance de forme dans la pince déformable (8).

5. Partie avant selon l'une des revendications précédentes, **caractérisée en ce que** le module de radiateur (2) et le pare-chocs (1) sont séparés par un espace vide (10).

6. Partie avant selon l'une des revendications précédentes, **caractérisée en ce que** le cadre (4) porte de part et d'autre du radiateur (3) des saillies (6) orientées vers le pare-chocs (1).

7. Partie avant selon l'une des revendications précédentes, **caractérisée en ce que** le cadre (4) porte un étrier (11) qui enjambe la face avant du radiateur (3).

8. Partie avant selon l'une des revendications précédentes, **caractérisée en ce qu'**une face arrière du pare-chocs (1) tournée vers le module de radiateur (2) présente une forme concave.
